# EUROPÄISCHE PATENTSCHRIFT

(11) **EP 1 923 639 B1**
(45) Veröffentlichungstag und Bekanntmachung des Hinweises auf die Patenterteilung: **04.11.2015**
(21) Anmeldenummer: 07017917.1
(22) Anmeldetag: 12.09.2007
(51) Int. Cl.: F24D 19/10

(54) **Kompaktheizungsanlage**
Compact heating unit
Installation de chauffage compacte

(30) Priorität: 20.11.2006 DE 102006054893
(43) Veröffentlichungstag der Anmeldung: 21.05.2008
(73) Patentinhaber: WILO AG, 44263 Dortmund (DE)
(72) Erfinder: Marko, Armin, 45500 Gien (FR)
(74) Vertreter: Cohausz, Helge B.

(56) Entgegenhaltungen:
- EP-A- 0 953 808
- EP-A- 1 160 515
- EP-A- 1 323 984
- EP-A- 1 538 397
- DE-A1- 1 753 239
- DE-A1- 3 923 027
- DE-A1- 4 041 183
- DE-A1- 10 139 510
- DE-C1- 19 646 314
- DE-U1- 29 610 050
- US-A1- 2002 033 420

## Beschreibung

Die Erfindung betrifft eine Kompaktheizungsanlage, umfassend wenigstens einen Brenner, einen Wärmetauscher, wenigstens eine Pumpe sowie Vorlauf und Rücklauf, zwischen denen eine Pumpe und der Wärmetauscher angeordnet sind und mittels denen die Kompaktheizungsanlage an ein Heizungsrohrnetz anschließbar ist. Die Erfindung betrifft weiterhin ein Verfahren zum Betrieb einer solchen Kompaktheizungsanlage.

Derartige an Vorlauf und Rücklauf eines Heizungsrohrnetzes anschließbare Kompaktheizungsanlagen mit Brenner und zwischen Vorlauf und Rücklauf angeordneter Pumpe und Wärmetauscher sind im Stand der Technik allgemein bekannt, z.B. aus der EP-A-1 160 515. Es handelt sich dabei üblicherweise um wandhängende, teilweise auch bodenstehende Geräte, die modular aufgebaut sind, was bedeutet, dass sie im Wesentlichen in einem einzigen Gehäuse sämtliche zum Betrieb benötigten Komponenten aufweisen und mittels von außen zugängigen Anschlüssen von Vorlauf und Rücklauf an ein Heizungsrohrnetz anschließbar sind. Eine Differenzdruckregelung durch eine zwischen Vorlauf und Rücklauf angeordnete Vorrichtung ist weiterhin aus dem Dokument EP-A-0 953 808 bekannt. Vorrichtungen und Verfahren zum Regeln einer Pumpe zeigen auch die Dokumente DE 39 23 027 A1 und DE 101 39 510 A1.

Heizungsrohrnetze der bekannten Art weisen dabei üblicherweise Thermostatventile auf, die normalerweise jeweils einem Heizkörper zugeordnet sind, um den Durchfluss durch den betreffenden Heizkörper in Abhängigkeit der jeweils gemessenen Raumtemperatur zu regeln. Hierbei ist das Problem bekannt, dass zum korrekten Funktionieren des gesamten Heizungssystems ein möglichst konstanter Differenzdruck zwischen Vorlauf und Rücklauf vorherrschen sollte, da ansonsten, insbesondere bei einem zu hohen Druck, die Thermostatventile nicht mehr sicher funktionieren. Zwischenzeitlich sind auch Heizungsrohrnetze bekannt geworden, bei denen statt Thermostatventilen sogenannte dezentrale Pumpen eingesetzt werden. Derartige dezentrale Pumpen sind zur Regelung des Durchflusses jedem Heizkörper zugeordnet, z.B. örtlich durch direkte Anordnung bei einem Heizkörper oder zumindest funktional.

Bekannte Kompaktheizungsanlagen, die interne Pumpen aufweisen, betreiben die jeweiligen Pumpen üblicherweise in einer definierten Betriebsstufe, die gegebenenfalls bei der Montage von einem Techniker in mehreren Stufen vorwählbar ist, sich jedoch sodann während des Betriebs nicht mehr ändert. Bei derartigen Kompaktheizungsanlagen ist der Differenzdruck außerhalb der Anlage ansteigend mit fallendem Durchfluss.

Oftmals werden Kompaktheizungsanlagen, insbesondere des wandhängenden Typs, mit einem Bypass ausgestattet, der zwischen Vorlauf und Rücklauf angeordnet ist und ein Rückschlagventil aufweist, welches beispielsweise federbetrieben ist und den Bypassdurchfluss ermöglicht, wenn der Differenzdruck einen spezifischen, voreingestellten Öffnungsdruck des Rückschlagventils überschreitet. Hierbei kann es vorgesehen sein, dass ein solcher Öffnungsdruck des Rückschlagventils während der Installation einer solchen Kompaktheizungsanlage durch einen Techniker einstellbar ist. Zwar lässt sich durch eine solche Maßnahme der Differenzdruck nach oben hin begrenzen, eine Konstantdruckkurve wird hier jedoch nicht erreicht.

Es ist weiterhin am Markt eine Kompaktheizungsanlage der Firma Junkers mit der Bezeichnung "Cerapur" bekannt, die die Möglichkeit des Konstantdruckbetriebs bietet. Bei dieser Kompaktheizungsanlage kann die interne Pumpe in mehrere Leistungsstufen geschaltet werden, wobei die Umschaltung immer dann erfolgt, wenn ein vorgegebenes Druckintervall nach oben oder unten überschritten wird. Dabei wird bei dieser bekannten Anlage der Differenzdruck aus der Drehzahl der Pumpe ermittelt. Dieses Verfahren ist jedoch ungenau, da über die Drehzahl der Pumpe nur der Volumenstrom berechnet werden kann, zur Berechnung des Differenzdruckes müssen zusätzliche Annahmen über den Druckabfall im Gerät getroffen werden, die zudem noch vom Verschmutzungsgrad des Gerätes abhängen.

Zudem handelt es sich bei dem Gerät "Cerapur" um ein Brennwertgerät, welches ohne Bypass arbeitet. Bei einem Heizgerät mit Bypass ist dieser Ansatz so nicht verwendbar.

Aufgabe der Erfindung ist es, eine Kompaktheizungsanlage der gattungsgemäßen Art sowie auch ein Verfahren zum Betrieb einer solchen Kompaktheizungsanlage bereitzustellen, mittels denen auf zuverlässige Art und Weise ein Konstantdruckbetrieb der Kompaktheizungsanlage, insbesondere unabhängig von dem jeweils aktuell vorliegenden Förderstrom möglich ist.

Erfindungsgemäß wird diese Aufgabe dadurch gelöst, dass die Vorrichtung ausgebildet ist als mechanischer Differenzdrucksensor, der abhängig vom Differenzdruck verschiedene Positionen einnimmt, wobei das Signal positionsabhängig gebildet ist, wobei bei einer ersten Position des Differenzdrucksensors die Pumpe mit maximaler Drehzahl läuft, bei einer Position zwischen einer ersten und dritten Position die Pumpe positionsabhängig drehzahlgeregelt ist und bei einer dritten Position ein interner Bypass zwischen Vorlauf und Rücklauf öffenbar ist.

Im Unterschied zum bekannten Stand der Technik wird hierbei nicht die Pumpe zur Beobachtung des Differenzdruckes herangezogen, sondern eine zur Pumpe separate Vorrichtung, die ein zuverlässiges objektives Ermitteln des Differenzdruckes zwischen Vorlauf und Rücklauf ermöglicht und anhand des ermittelten, gegebenenfalls in diskreten Stufen ermittelten Differenzdruckes ein von diesem Differenzdruck abhängiges Signal erzeugt. Anhand dieses Signals kann sodann die Drehzahl der Pumpe, z.B. in diskreten Stufen oder kontinuierlich verändert werden, um den Differenzdruck zwischen Vorlauf und Rücklauf einzuregeln, insbesondere im Wesentlichen konstant einzuregeln.

Vorteilhaft ist es somit, dass mit einer erfindungsgemäßen Kompaktheizungsanlage bzw. dem erfindungsgemäßen Verfahren der vorherrschende Differenzdruck in der Heizungsanlage zumindest in einem vorgebbaren Regelbereich konstant gehalten werden kann, insbesondere um so eine sichere Funktion der Thermostatventile für alle Betriebsbedingungen und insbesondere bei allen Massenströmen zu gewährleisten. Hierbei wird es als besonders vorteilhaft empfunden, wenn der Differenzdruck in einem Bereich von plus minus 20% oder bevorzugt in einem Bereich von plus minus 10%, gegebenenfalls mit einer noch höheren Genauigkeit von weniger als plus minus 10% einregelbar ist.

So wird es gemäß der Erfindung als eine Regelung auf einen im Wesentlichen konstanten Differenzdruck verstanden, wenn die Möglichkeit besteht, den tatsächlich im System vorherrschenden Differenzdruck in einem vorgegebenen Differenzdruckintervall einzuregeln, wobei die Intervallgrenzen sich in dem vorgenannten prozentualen Bereich um einen gewünschten Differenzdruck bewegen.

Beispielsweise kann es hier vorgesehen sein, dass in Abhängigkeit des Signals, welches die Vorrichtung erzeugt, die Drehzahl einer Pumpe, also hier insbesondere der intern in der Kompaktheizungsanlage vorgesehenen Pumpe modulierbar ist. Beispielsweise kann es bei einer Modulation vorgesehen sein, dass die Drehzahl der Pumpe kontinuierlich moduliert wird und der Modulierungshub und/oder die mittlere Modulationsdrehzahl von dem Signal des Differenzdruckes abhängt. So wird bei einer derartigen Regelung der Differenzdruck ebenso moduliert werden, wobei durch die Begrenzung des Modulationshubs und/oder mittlere Modulationsdrehzahl anhand des erhaltenen Signals aus der vorgenannten Vorrichtung die Einhaltung der vorgeschriebenen Grenzen um den gewünschten Differenzdruck gewährleistet bleibt.

Ebenso sind Ausführungen als vorteilhaft vorgesehen, bei denen nicht eine Modulierung der Drehzahl der Pumpe vorgesehen ist, sondern gegebenenfalls eine mit dem Signal der Vorrichtung proportionale Änderung der Pumpendrehzahl oder aber eine stufenweise Drehzahländerung in Abhängigkeit des von der Vorrichtung erhaltenen Signals.

In einer Ausführungsvariante kann es vorgesehen sein, dass die Vorrichtung ausgebildet ist als ein Differenzdrucksensor, der ein vom Differenzdruck abhängiges Signal bereitstellt und dessen Signal eine Eingangsgröße direkt entweder der Pumpenelektronik oder der Elektronik der Kompaktheizungsanlage bildet. So kann beispielsweise die Anordnung aus diesem Differenzdrucksensor und der Pumpe ein autarkes, internes System der Kompaktheizungsanlage bilden, welches für die Einregelung des gewünschten Differenzdruckes, insbesondere innerhalb der vorgegebenen Grenzen, ermöglicht. Ebenso kann eine übergeordnete Regelung der Pumpe durch die Elektronik der Kompaktheizungsanlage vorgenommen werden, die separat zur Pumpenelektronik angeordnet ist.

So kann demnach die Pumpe durch die Elektronik der Kompaktheizungsanlage entweder geregelt oder gesteuert sein.

Der vorgenannte Differenzdrucksensor ist in erfindungsgemäßer Ausführung als mechanischer Differenzdrucksensor ausgebildet. Hierbei kann in einem solchen Differenzdrucksensor z.B. eine verlagerbares, z.B. verschiebbares Element angeordnet sein, das in Abhängigkeit des Differenzdrucks verschiedene Positionen einnimmt, wobei das Signal positionsabhängig, insbesondere in diskreten Stufen gebildet ist. So kann anhand dieses diskreten Signals eine Änderung der Pumpendrehzahl vorgenommen werden, die sodann gegebenenfalls ebenso in diskreten Stufen erfolgt. Hierbei kann es gegebenenfalls vorgesehen sein, dass die mechanischen Positionen, die der Differenzdrucksensor bzw. ein darin vorgesehenes, verlagerbares, insbesondere verschiebbares Element einnimmt, einstellbar sind, beispielsweise bei der Installation durch einen Techniker.

Bei der vorgenannten Ausführung kann es vorgesehen sein, dass durch verschiedene mechanische Positionen, insbesondere durch mechanische Weiterleitung, eine mechanische Verstellung eines Elementes an der Pumpe bewirkt wird, um so eine Drehzahländerung zu bewirken.

In einer bevorzugten Ausführung wird es jedoch vorgesehen sein, dass die mechanischen Positionen, die am Differenzdrucksensor erreicht werden, elektronisch erfassbar sind, um mit den elektronisch erfassten Positionsdaten die Pumpe zu regeln bzw. zu steuern. GGfs. kann aus den Positionsdaten, sofern diese nicht selbst das Signal im Sinne der Erfindung bilden, ein Signal zur Regelung / Steuerung gebildet werden. Hierbei kann die Lageerfassung eines verlagerbaren Elementes im Differenzdrucksensor beispielsweise anhand geänderter Widerstandswerte, optisch, kapazitiv oder auf sonstige Art und Weise erfolgen, so dass durch diese Erfassung ein elektronisches Signal zur Verfügung steht, welches leitungsgebunden, funkgebunden oder auch optisch an eine Elektronik zur Regelung/Steuerung der Pumpe weitergeleitet werden kann. Bei dieser Elektronik kann es sich wie vorgenannt um die Pumpenelektronik oder aber auch um die Heizungselektronik handeln.

Die Regelung bzw. Steuerung der Pumpendrehzahl erfolgt bei dem mechanischen Differenzdrucksensor derart, dass in einer ersten Position des Differenzdrucksensors die Pumpe mit maximaler Drehzahl läuft, bei einer Position zwischen einer ersten und einer dritten Position die Pumpe in Abhängigkeit der Position drehzahlgeregelt ist, und bei einer dritten Position ein interner Bypass zwischen Vorlauf und Rücklauf öffenbar ist.

So wird hiermit eine Regelung erreicht, gemäß der die Pumpe eine maximale Drehzahl erreichen kann und sofern hierbei ein gewünschter Differenzdruck bzw. das Intervall eines Differenzdruckes überschritten wird, die Pumpe drehzahlgeregelt wird, wobei diese Drehzahl sodann abhängig sein kann von dem tatsächlichen Signal bzw. in der genannten Ausführung von der tatsächlich eingenommenen Position des Differenzdrucksensors.

Die Vorrichtung bzw. ein Differenzdrucksensor bzw. ein darin verlagerbares Element wird, sofern die Drehzahlregelung nicht ausreichend ist, um den Differenzdruck zu begrenzen, ab einem dritten Signal, bzw. einer dritten mechanischen Position sodann einen vorgesehenen internen Bypass öffnen. Hierdurch wird gewährleistet, dass ein minimal benötigter Fluss von Wärmeträgermedium, wie beispielsweise Wasser, durch den primären Wärmetauscher der Kompaktheizungsanlage gewährleistet wird, insbesondere selbst dann, wenn eine Vielzahl von Thermostatventilen im Heizkreislauf geschlossen ist und insofern der Durchfluss gering und der Differenzdruck hoch ist.

Bei dem hier eingesetzten Differenzdrucksensor kann es sich beispielsweise um eine Anordnung handeln, die gleichzeitig auch die Funktion eines Rückschlagventils ausübt, so dass diese Differenzdrucksensoranordnung zunächst durch die Verlagerung eines darin angeordneten Elementes den Bypass geschlossen hält und wie vorbeschrieben die genannten Positionen und gegebenenfalls davon abhängige Signale bereitstellt, wobei bei einer Verlagerung in die dritte oder über die dritte Position hinaus der Bypass geöffnet wird. Bei dieser Ausführung ist somit das Rückschlagventil ebenso wie der Differenzdrucksensor in einer Vorrichtung kombiniert. Es kann jedoch auch vorgesehen sein, dass der Differenzdrucksensor der vorbeschriebenen erfindungsgemäßen Art separat zu einem zusätzlichen Rückschlagventil vorgesehen ist, welches für die Öffnung und Schließung des Bypasses vorgesehen ist.

Eine Drehzahlregelung in Verbindung mit einem vorgenannten erfindungsgemäßen Differenzdrucksensor kann beispielsweise derart erfolgen, dass bei einer Abweichung von einem Sollsignal / einer Sollposition, insbesondere einem/einer solchen, die zwischen der/dem vorgenannten ersten und dritten Signal/Position liegt, die Drehzahl der Pumpe bei Unterschreitung dieses Sollsignals / dieser Sollposition erhöht wird und bei einer Überschreitung verringert wird. So wird im Wesentlichen zwischen dem ersten und dritten Signal bzw. der ersten und dritten Position nur ein zweites Signal bzw. eine zweite Position eines verlagerbaren Elementes in dem Differenzdrucksensor ausgewertet und in Abhängigkeit der relativen Lage zu diesem Signal / dieser Position die Regelung der Drehzahl vorgenommen. Ebenso kann es vorgesehen sein, dass zwischen dem ersten und dritten Signal bzw. der ersten und der dritten vorgenannten Position nicht nur ein diskreten zweites Signal / eine diskrete zweite Position vorliegt, die auswertbar ist, sondern eine Vielzahl bzw. zumindest mehrere zweite Signals/Positionen, zu denen jeweils ein entsprechendes elektrisches Signal gebildet werden kann.

In einer anderen Ausführung kann es auch vorgesehen sein, dass die Vorrichtung nicht unmittelbar direkt den Differenzdruck erfasst, sondern den Massenstrom, der zwischen Vorlauf und Rücklauf vorliegt und hieraus aus zugrunde gelegten Anlagedaten, die beispielsweise intern in der Kompaktheizungsanlage in einem Speicher abgelegt sein können, wie beispielsweise den Leitungswiderständen, Informationen über den Primärwärmetauscher, Kennlinien der Pumpe etc. den Druckverlust, d.h. den Differenzdruck zwischen Vorlauf und Rücklauf berechnet und so aus dem berechneten Druckverlust proportional oder auch in diskreten Schritten oder auf andere Art und Weise das Signal erzeugt, welches sodann zur Änderung der Pumpendrehzahl vorgesehen sein kann.

Es kann weiterhin auch vorgesehen sein, dass die Kompaktheizungsanlage ein Dreiwegeventil aufweist, welches entweder durch das auf die vorgenannten oder auch auf noch nicht genannte erfindungsgemäße Arten gebildete Signal ansteuerbar ist oder aber durch ein aus diesem Signal erzeugtes zweites Signal ansteuerbar ist, mit welchem signalabhängig der Massenstrom zu einem Bypass wenigstens teilweise umschaltbar ist.

Es besteht sodann die Möglichkeit, sowohl zum einen separat den notwendigen Massenstrom durch den Primärwärmetauscher zu gewährleisten und weiterhin eine Konstantdruckregelung innerhalb eines gewünschten Konstantdruckintervalls zusätzlich vorzunehmen.

Ebenso kann es vorgesehen sein, dass alternativ oder ergänzend auch das Dreiwegeventil nutzbar ist, um vom Heizbetrieb auf einen Brauchwasserbetrieb, insbesondere mittels einer Erwärmung eines sekundären Plattenwärmeübertragers, umzuschalten.

Bezüglich sämtlicher Ausführungen ist festzustellen, dass die in Verbindung mit einer Ausführung genannten technischen Merkmale nicht nur bei der spezifischen Ausführung eingesetzt werden können, sondern auch bei den jeweils anderen Ausführungen. Sämtliche offenbarten technischen Merkmale dieser Erfindungsbeschreibung sind als erfindungswesentlich einzustufen und beliebig miteinander kombinierbar oder in Alleinstellung einsetzbar.

## Patentansprüche

1. Kompaktheizungsanlage umfassend wenigstens einen Brenner, einen Wärmetauscher, wenigstens eine Pumpe sowie Vorlauf und Rücklauf, zwischen denen eine Pumpe und der Wärmetauscher angeordnet sind und mittels denen die Kompaktheizungsanlage an ein Heizungsröhrnetz anschließbar ist, **dadurch gekennzeichnet ist, dass** zwischen Vorlauf und Rücklauf eine Vorrichtung angeordnet ist, die ein vom Differenzdruck zwischen Vorlauf und Rücklauf abhängiges Signal erzeugt, wobei in Abhängigkeit des Signal eine Pumpe in der Drehzahl derart regelbar ist, dass zwischen Vorlauf und Rücklauf für alle Massenströme ein gewünschter Differenzdruck einregelbar ist, wobei die Vorrichtung als mechanischer Differenzdrucksensor ausgebildet ist, der abhängig vom Differenzdruck verschiedene Positionen einnimmt, wobei das Signal positionsabhängig gebildet ist, wobei bei einer ersten Position des Differenzdrucksensors die Pumpe mit maximaler Drehzahl läuft, bei einer Position zwischen einer ersten und dritten Position die Pumpe positionsabhängig drehzahlgeregelt ist und bei einer dritten Position ein interner Bypass zwischen Vorlauf und Rücklauf offenbar ist.

2. Kompaktheizungsanlage nach Anspruch 1, **dadurch gekennzeichnet, dass** der Differenzdruck unabhängig vom Volumenstrom in einem Bereich von plus/minus 20 %, insbesondere plus/minus 10 % einregelbar ist.

3. Kompaktheizungsanlage nach einem der vorherigen Ansprüche, **dadurch gekennzeichnet, dass** in Abhängigkeit des Signals der Vorrichtung die Drehzahl einer Pumpe modulierbar ist.

4. Kompaktheizungsanlage nach einem der vorherigen Ansprüche, **dadurch gekennzeichnet, dass** die Vorrichtung ausgebildet ist als Differenzdrucksensor, dessen Signal eine Eingangsgröße direkt der Pumpenelektronik oder der Elektronik der Kompaktheizungsanlage bildet.

5. Kompaktheizungsanlage nach Anspruch 4, **dadurch gekennzeichnet, dass** eine Pumpe durch die Elektronik der Kompaktheizungsanlage geregelt / gesteuert ist.

6. Kompaktheizungsanlage nach Anspruch 1, **dadurch gekennzeichnet, dass** die mechanischen Positionen des Differenzdrucksensors elektronisch erfassbar sind, um aus den elektronisch erfassten Positionsdaten das Signal zu bilden.

7. Kompaktheizungsanlage nach Anspruch 1, **dadurch gekennzeichnet, dass** eine Drehzahlregelung derart erfolgt, dass bei einer Abweichung von einer Sollposition, die zwischen der ersten und dritten Position liegt, die Drehzahl bei einer Unterschreitung der Sollposition erhöht wird und bei einer Überschreitung verringert wird.

8. Kompaktheizungsanlage nach einem der vorherigen Ansprüche, **dadurch gekennzeichnet, dass** die Vorrichtung den Massenstrom erfasst und hieraus aus zugrunde gelegten Anlagendaten, insbesondere Leitungswiderständen, Primärwärmetauscher, etc., den Druckverlust berechnet und aus dem berechneten Druckverlust das Signal erzeugbar ist.

9. Kompaktheizungsanlage nach einem der vorherigen Ansprüche, **dadurch gekennzeichnet, dass** sie ein durch das Signal, oder ein daraus erzeugtes zweites Signal ansteuerbares 3-Wege-Ventil aufweist, mit welchem signalabhängig der Massenstrom zu einem Bypass wenigstens teilweise umschaltbar ist.

10. Kompaktheizungsanlage nach Anspruch 9, **dadurch gekennzeichnet, dass** das 3-Wege-Ventil ebenfalls nutzbar ist, um vom Heizbetrieb auf Brauchwasserbetrieb, insbesondere mittels einer Erwärmung eines Sekundär-Platten-Wärmeübertragers, umzuschalten.

11. Verfahren zum Betrieb einer Kompaktheizungsanlage umfassend wenigstens einen Brenner, einen Wärmetauscher, wenigstens eine Pumpe sowie Vorlauf und Rücklauf, zwischen denen eine Pumpe und der Wärmetauscher angeordnet sind und mittels denen die Kompaktheizungsanlage an ein Heizungsrohrnetz anschließbar ist, **dadurch gekennzeichnet, dass** zwischen Vorlauf und Rücklauf eine Vorrichtung angeordnet ist, die ein vom Differenzdruck zwischen Vorlauf und Rücklauf abhängiges Signal erzeugt, wobei in Abhängigkeit des Signal eine Pumpe in der Drehzahl derart geregelt wird, dass zwischen Vorlauf und Rücklauf für alle Massenströme ein gewünschter Differenzdruck vorherrscht, wobei die Vorrichtung als mechanischer Differenzdrucksensor ausgebildet ist, der abhängig vom Differenzdruck verschiedene Positionen einnimmt, wobei das Signal positionsabhängig gebildet wird, wobei bei einer ersten Position des Differenzdrucksensors die Pumpe mit maximaler Drehzahl läuft, bei einer Position zwischen einer ersten und dritten Position die Pumpe positionsabhängig drehzahlgeregelt wird und bei einer dritten Position ein interner Bypass zwischen Vorlauf und Rücklauf geöffnet wird.

## Claims

1. Compact heating unit comprising at least one burner, one heat exchanger, at least one pump and a forward flow section and return flow section between which a pump and the heat exchanger are arranged and by means of which the compact heating unit can be connected to a heating pipe network, **characterized in that** arranged between the forward flow section and the return flow section is a device which generates a signal which is dependent on the differential pressure between the forward flow section and the return flow section, wherein a pump can be regulated in terms of the rotational speed as a function of the signal in such a way that between the forward flow section and the return flow section a desired differential pressure can be applied for all mass flows, wherein the device is designed as a mechanical differential pressure sensor which assumes different positions as a function of the differential pressure, wherein the signal is formed in a position-dependent fashion, wherein in a first position of the differential pressure sensor the pump runs at a maximum rotational speed, in a position between a first and a third position the pump is regulated in terms of the rotational speed in a position-dependent fashion, and in a third position an internal bypass between the forward flow section and the return flow section can be opened.

2. Compact heating unit according to Claim 1, **characterized in that** the differential pressure can be applied as a function of the volume flow in a range of plus/minus 20%, in particular plus/minus 10%.

3. Compact heating unit according to one of the preceding claims, **characterized in that** the rotational speed of a pump can be modulated as a function of the signal.

4. Compact heating unit according to one of the preceding claims, **characterized in that** the device is designed as a differential pressure sensor whose signal forms an input variable directly of the pump electronics or the electronics of the compact heating unit.

5. Compact heating unit according to Claim 4, **characterized in that** a pump is open-/closed-loop controlled by the electronics of the compact heating unit.

6. Compact heating unit according to Claim 1, **characterized in that** the mechanical positions of the differential pressure sensor can be detected electronically, in order to form the signal from the electronically detected position data.

7. Compact heating unit according to Claim 1, **characterized in that** regulation of the rotational speed takes place in such a way that in the event of a deviation from a setpoint position which is between the first and third positions, the rotational speed is increased when the setpoint position is undershot and is reduced when it is exceeded.

8. Compact heating unit according to one of the preceding claims, **characterized in that** the device detects the mass flow and calculates therefrom the pressure loss on the basis of underlying system data, in particular line resistances, primary heat exchanger etc., and the signal can be generated on the basis of the calculated pressure loss.

9. Compact heating unit according to one of the preceding claims, **characterized in that** said compact heating unit has a 3-way valve which can be activated by the signal or a second signal which is generated on the basis thereof and with which the mass flow can be switched at least partially to a bypass as a function of the signal.

10. Compact heating unit according to Claim 9, **characterized in that** the 3-way valve can also be used to switch from the heating mode to a service water mode, in particular by heating a secondary plate heat exchanger.

11. Method for operating a compact heating unit, comprising at least one burner, one heat exchanger, at least one pump and a forward flow section and return flow section between which a pump and the heat exchanger are arranged and by means of which the compact heating unit can be connected to a heating pipe network, **characterized in that** arranged between the forward flow section and the return flow section is a device which generates a signal which is dependent on the differential pressure between the forward flow section and return flow section, wherein a pump is regulated in terms of the rotational speed as a function of the signal in such a way that between the forward flow section and the return flow section a desired differential pressure is present for all mass flows, wherein the device is designed as a mechanical differential pressure sensor which assumes different positions as a function of the differential pressure, wherein the signal is formed in a position-dependent fashion, wherein in a first position of the differential pressure sensor the pump runs at a maximum rotational speed, in a position between a first and a third position the pump is regulated in terms of the rotational speed in a position-dependent fashion, and in a third position an internal bypass between the forward flow section and the return flow section is opened.

## Revendications

1. Installation compacte de chauffage comprenant au moins un brûleur, un échangeur de chaleur, au moins une pompe ainsi qu'un départ et un retour entre lesquels une pompe et l'échangeur de chaleur sont disposés et au moyen desquels l'installation compacte de chauffage peut être raccordée à un réseau de tubes de chauffage, **caractérisée en ce que**
un dispositif qui forme un signal qui dépend de la différence de pression entre le départ et le retour est disposé entre le départ et le retour,
**en ce que** la vitesse de rotation d'une pompe peut être régulée en fonction du signal de telle sorte qu'une différence de pression souhaitée puisse être régulée entre le départ et le retour pour tous les écoulements massiques,
**en ce que** le dispositif est configuré comme capteur mécanique de différence de pression qui prend différentes positions en fonction de la différence de pression,
**en ce que** le signal est formé en fonction de cette position,
**en ce que** la pompe tourne à vitesse de rotation maximale dans une première position du capteur de différence de pression,
**en ce que** sa vitesse de rotation est régulée en fonction de la position entre une première et une troisième position et
**en ce qu'**une dérivation interne peut être ouverte entre le départ et le retour en une troisième position.

2. Installation compacte de chauffage selon la revendication 1, **caractérisée en ce que** la différence de pression peut être régulée indépendamment du débit volumique dans une plage de plus/moins 20 % et en particulier de plus/moins 10 %.

3. Installation compacte de chauffage selon l'une des revendications précédentes, **caractérisée en ce que** la vitesse de rotation d'une pompe peut être modulée en fonction du signal du dispositif.

4. Installation compacte de chauffage selon l'une des revendications précédentes, **caractérisée en ce que** le dispositif est configuré comme capteur de différence de pression dont le signal forme une grandeur d'entrée qui pénètre directement dans l'électronique de la pompe et dans l'électronique de l'installation compacte de chauffage.

5. Installation compacte de chauffage selon la revendication 4, **caractérisée en ce qu'**une pompe est régulée et/ou commandée par l'électronique de l'installation compacte de chauffage.

6. Installation compacte de chauffage selon la revendication 1, **caractérisée en ce que** les positions mécaniques du capteur de différence de pression peuvent être saisies électroniquement pour former le signal à partir des données de position saisies électroniquement.

7. Installation compacte de chauffage selon la revendication 1, **caractérisée en ce qu'**en cas d'écart par rapport à une position de consigne située entre la première et la troisième position, une régulation de la vitesse de rotation s'effectue en augmentant les vitesses de rotation lorsque la position de consigne n'est pas atteinte et en la diminuant lorsqu'elle est dépassée.

8. Installation compacte de chauffage selon l'une des revendications précédentes, **caractérisée en ce que** le dispositif saisit le débit volumique et en calcule la perte de charge à partir de données de l'installation, en particulier les résistances des conduits et de l'échangeur de chaleur primaire, le signal pouvant être formé à partir de la perte de charge calculée.

9. Installation compacte de chauffage selon l'une des revendications précédentes, **caractérisée en ce qu'**elle présente une vanne à 3 voies qui peut être commandée par le signal ou par un deuxième signal formé par le premier, et par laquelle débit massique peut être basculé au moins en partie vers une dérivation en fonction du signal.

10. Installation compacte de chauffage selon la revendication 9, **caractérisée en ce que** la vanne 3 voies peut également être utilisée pour commuter du fonctionnement de chauffage sur un fonctionnement en chauffage d'eau chaude, en particulier au moyen d'un chauffage d'un échangeur de chaleur secondaire à plaques.

11. Procédé de conduite d'une installation compacte de chauffage comprenant au moins un brûleur, un échangeur de chaleur, au moins une pompe ainsi qu'un départ et un retour entre lesquels une pompe et l'échangeur de chaleur sont disposés et au moyen desquels l'installation compacte de chauffage peut être raccordée à un réseau de conduits de chauffage, **caractérisé en ce que**
un dispositif qui forme un signal qui dépend de la différence de pression entre le départ et le retour est disposé entre le départ et le retour,
**en ce que** la vitesse de rotation d'une pompe peut être régulée en fonction du signal de telle sorte qu'une différence de pression souhaitée puisse être régulée entre le départ et le retour pour tous les écoulements massiques,
**en ce que** le dispositif est configuré comme capteur mécanique de différence de pression qui prend différentes positions en fonction de la différence de pression,
**en ce que** le signal est formé en fonction de cette position,
**en ce que** la pompe tourne à vitesse de rotation maximale dans une première position du capteur de différence de pression,
**en ce que** sa vitesse de rotation est régulée en fonction de la position entre une première et une troisième position et
**en ce qu'**une dérivation interne peut être ouverte entre le départ et le retour en une troisième position.
